# EUROPEAN PATENT SPECIFICATION

(11) **EP 2 456 807 B1**
(45) Date of publication and mention of the grant of the patent: **17.07.2013**
(21) Application number: 10737367.2
(22) Date of filing: 26.07.2010
(51) Int. Cl.: C08G 65/00

(54) **SYNTHESIS METHOD USING IONIC LIQUIDS**
SYNTHESEVERFAHREN MIT IONISCHEN FLÜSSIGKEITEN
PROCÉDÉ DE SYNTHÈSE UTILISANT DES LIQUIDES IONIQUES

(30) Priority: 24.07.2009 US 228174 P
(43) Date of publication of application: 30.05.2012
(73) Proprietor: Invista Technologies S.à.r.l., 9000 St. Gallen (CH)
(72) Inventor: WHISTON, Keith, Darlington DL3 8EY (GB); LANGRICK, Charles Richard, Middlesbrough TS7 0GA (GB); SEDDON, Kenneth Richard, Donaghadee BT21 0LA (GB); PUGA, Alberto Vaca, Belfast BT9 7FP (GB)
(74) Representative: Cockerton, Bruce Roger
(86) International application number: PCT/GB2010/001424
(87) International publication number: WO 2011/010116

(56) References cited:
- EP-A1- 0 211 693
- P. KUBISA: "APPLICATION OF IONIC LIQUIDS AS SOLVENTS FOR POLYMERIZATION PROCESSES", PROGRESS IN POLYMER SCIENCE, vol. 29, 1 January 2004 (2004-01-01), pages 3-12, XP002611487, ELSEVIER
- OLIVIER-BOURBIGOU H ET AL: "Ionic liquids: perspectives for organic and catalytic reactions", JOURNAL OF MOLECULAR CATALYSIS. A, CHEMICAL, ELSEVIER, AMSTERDAM, NL, 1 January 2002 (2002-01-01), pages 419-437, XP002274532, ISSN: 1381-1169, DOI: DOI:10.1016/S1381-1169(01)00465-4
- THOMAS WELTON: "Room-Temperature Ionic Liquids. Solvents for Synthesis and Catalysis", CHEMICAL REVIEWS, ACS,WASHINGTON, DC, US, vol. 99, no. 8, 1 January 1999 (1999-01-01), pages 2071-2083, XP002598847, ISSN: 0009-2665, DOI: DOI:10.1021/CR980032T [retrieved on 1999-07-07]
- I. NEWINGTON ET AL: "IONIC LIQUIDS AS DESIGNER SOLVENTS FOR NUCLEAOPHILIC AROMATIC SUBSTITUTIONS", ORGANIC LETTERS, vol. 9, no. 25, 1 January 2007 (2007-01-01), pages 5247-5250, XP002611488,
- LOZINSKAYA E I ET AL: "Direct polycondensation in ionic liquids", EUROPEAN POLYMER JOURNAL, PERGAMON PRESS LTD. OXFORD, GB, vol. 40, no. 9, 1 September 2004 (2004-09-01), pages 2065-2075, XP004523626, ISSN: 0014-3057, DOI: DOI:10.1016/J.EURPOLYMJ.2004.05.010
- HOLBREY J D ET AL: "IONIC LIQUIDS", CLEAN PRODUCTS AND PROCESSES, SPRINGER, BERLIN, DE, vol. 1, 1 January 1999 (1999-01-01), pages 223-236, XP001000207, ISSN: 1435-2974

## Description

### FIELD OF THE INVENTION

The disclosures herein relate to production of polymers employing a nucleophilic aromatic substitution reaction in an ionic liquid. The disclosures relate to the production of polymers belonging to a class of polyetherfcetones and polyethersulphones. More particularly these disclosures relate to the use of ionic liquids as a medium for the synthesis of a polyetherketone, known as polyetheretherketone (PEEK), by either solution or suspension polymerization.

### BACKGROUND OF THE INVENTION

Polyetheretherketone (PEEK), is known from, at least, Ashford's Dictionary of Industrial Chemicals, 1994, Wavelength Productions Ltd, p 733. Victrex PLC is the manufacturer of VICTREX® polyetheretherketone polymer which has the repeating structure below.

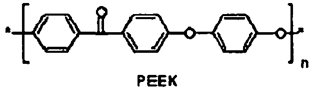

A known commercial technology for the production of PEEK from 4,4'-difluorobenzophenone employs high temperature synthesis up to 300°C in diphenylsulphone solvent, for example.

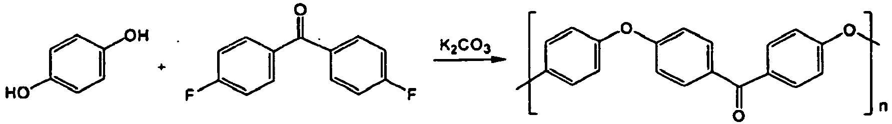

However, the use of diphenylsulphone as the solvent in this reaction is problematic because of limitations in the liquid range of the solvent at low temperatures. The use of diphenylsulphone results in the formation of a "toffee" or highly viscous mixture of product and solvent at room temperature when product separation takes place because the solvent is a solid under those conditions. Diphenylsulphone is also toxic and so its use has environmental implications.

An alternative solvent for the commercial production of PEEK is N-methylpyrrolidone (NMP). EP1464662 to Mitsui includes disclosure where NMP is the solvent used. However, there are also problems associated with this solvent because it has a significant vapour pressure at the temperatures required for the reaction. This means elevated pressures are required and therefore specialist high pressure process equipment. The use of a relatively volatile solvent also means that the heat that can be introduced to the reaction is limited because of the need to avoid solvent reflux.

As shown above, the known commercial syntheses of PEEK use potassium carbonate as the base. This is because the corresponding sodium carbonate is not soluble enough in the organic reaction solvents used. Potassium carbonate is more expensive than the corresponding sodium salt and so it would be advantageous to be able to use sodium carbonate as the base. It is known in the art that the type and particle size of the base used in the formation of PEEK is very important because of the low solubility of the base in the conventional solvent medium. For example WO2010046483 discusses the specific requirements for sodium carbonate with large particles to be avoided in the synthesis because of potential product contamination. This limitation is avoided with the use of Ionic Liquid solvents.

Another feature of the known commercial condensation polymerizations is the problem associated with the purity of the polymer produced. In the case of the above synthesis of PEEK, the by-product potassium fluoride is largely insoluble in the solvent systems used, and so becomes entrapped in the PEEK polymer matrix as it is formed. It is subsequently very difficult to remove the entrapped potassium fluoride, and this places limitations on the purity of the polymer that is obtainable via the known commercial syntheses.

The reaction of hydroquinone and 4,4'-difluorobenzophenone (a nucleophilic aromatic substitution reaction) discussed above provides PEEK as a partially crystalline thermoplastic polymer. The polymer is characterized by its excellent chemical and thermal resistance. The electrical insulation properties of the polymer are known to be similar to those of fluoropolymers. Uses of PEEK include electrical cable insulation and plastic mechanical parts. Known processing methods applied to PEEK are extrusion and injection molding on conventional equipment.

One polyethersulphone polymer synthesis known in the art is a reaction of a diphenol and bis(4-chlorophenyl)sulphone, forming a polyether by elimination of sodium chloride:

nHOC₆H₄OH + n(ClC₆H₄)₂SO₂ + nNa₂CO₃→ [OC₆H₄SO₂C₆H₄]ₙ + 2nNaCl + nH₂O + nCO₂

The diphenol is typically bisphenol-A or, as shown above, hydroquinone. Polyethersulphone's are engineering thermoplastics possessing excellent thermal stability and mechanical strengthen. The structure and properties of a particular polyethersulphone, known as PES, are discussed in Engineering Thermoplastics (ISBN 0-8247-7294-6) Margolis J.M. Ed. Rigby R.B., Chapter 9 235.

Ionic liquids or low temperature molten salts are known in the art as very low volatility solvents suitable for carrying out a range of chemical reactions. Polymerization reactions have previously been described in ionic liquids but these have been predominantly polymerization reactions giving rise to amorphous polymers such as polymethylmethacralate, (PMMA), or polyolefins (Polymer Synthesis in Ionic Liquids, Haddlelton D.M., Welton T., Carmichael A.J. in Ionic Liquids in Synthesis; Wassercheid P.,Welton T., Eds. 2nd Edition 2008, Wiley). These polymers typically have good solubility in a range of organic solvents and so the choice of the solvent for these reactions is not critical. Additionally, these polymerization reactions differ from the commercial syntheses discussed above in that they proceed via a free radical mechanism and not via condensation polymerization mechanism, as in the synthesis of PEEK, for example. The limitations of solvents for condensation polymerization reactions are known in the art. For example, PEEK is one of the highest melting point semi-crystalline polymers that can be made and, as such, the oligomers produced during its formation have low solubility and crystalise from the reaction medium. In the case of condensation polymerization, it is understood in the art that the molecular weight of the polymer formed is highly dependent on the solubility of the polymer in the solvent. EP1464662 states that polymerization only progresses when the polymer being formed is dissolved in the solvent and that for PEEK, which is known to show very low solubility in conventional solvents, polymer will deposit at low conversion because of this. Polymer 1988,29,1902 also states that solubility of the forming polymer is the principle limitation for the use of conventional solvents in the formation of PEEK. Therefore, the choice of the solvent used for condensation polymerization is highly critical and ionic liquids have not, until now, been considered as viable solvents for the preparation of high molecular weight condensation polymers, such as PEEK.

Ionic liquids have been employed in the art as solvents for nucleophilic aromatic substitution reactions (see Welton T., Newington I., Perez-Arlandis J.M., Organic Letters 2007, 9, 5247) for the synthesis of ethers. However, it has not previously been envisaged that they could be used as solvents for the synthesis of polymers by nucleophilic aromatic substitution routes.

### SUMMARY OF THE INVENTION

The disclosures herein provide a method of conducting a nucleophilic aromatic substitution reaction in an ionic liquid and forming a polymeric material. Thus, in one aspect the invention relates to the use of an ionic liquid as a solvent in a nucleophilic aromatic substitution reaction to form a polymeric material.

The invention is based on the surprising finding that ionic liquids can be used as the solvent for a nucleophilic aromatic substitution polymerization reaction which leads, in a facile way, to high molecular weight polymers. Owing to the low volatility of ionic liquids and their wide liquid range, the disadvantages associated with the use of conventional organic solvents have been overcome by the present invention. For example, the ionic liquid solvent exists in the liquid phase at the temperatures required for the reaction and so the problems associated with the use of high pressure and temperatures are overcome. The ionic liquid solvent also remains in the liquid phase at the lower temperatures required for isolation of the product polymer, thus leading to a relatively facile solvent separation.

An embodiment of the method of the invention comprises: providing at least a portion of a first component (such as a dihalide monomer) and a portion of a second component (such as a diphenoloic monomer) to a portion of an ionic liquid and forming a pre-reaction mixture; providing heat and agitation to the pre-reaction mixture for a period of time sufficient to allow substantial reaction of the first and second components and isolating the polymeric material.

The dihalide monomers used in the invention typically have the formula X-R¹-[C(O)-R²]ₙ-Y or X-R¹-S(O)₂-R²-Y wherein;
X and Y are independently selected from the group consisting of F, Cl, Br and I. Preferably X and Y are the same and are Cl or F. Most preferably, X and Y are F.
R¹ and R² are aryl groups. Optionally, the aryl groups are phenylene groups optionally further substituted with one or more groups selected from alkyl or halogen.
n is 1 or 2. Preferably n is 1.
X and Y are attached to groups R¹ and R² respectively at any allowable position. In the case where R¹ and R² are phenylene groups, X and Y can each independently be attached at the ortho, meta, or para positions on the phenyl ring. Preferably, X and Y are each attached at the para position of the phenyl ring.

In a preferred embodiment R¹ and R² are unsubstituted phenylene groups, X and Y are Cl or F and n is 1. More preferably the dihalide monomers used in the invention are selected from 4,4'-difluorobenzophenone, 4,4'-dichlorobenzophenone or bis(4-chlorophenyl)sulphone. Most preferably, the dihalide monomer is 4,4'-difluorobenzophenone.

The diphenolic monomers used in the invention are selected from compounds having two phenol OH groups. The diphenolic monomers typically have the general formula HO-Ar-QH wherein Ar is an aryl group that can contain up to three phenyl groups linked via carbonyl functional groups. For example, in one embodiment Ar is -Ph-C(O)-Ph-C(O)-Ph- and the product formed is PEKK. In another embodiment Ar is a phenylene group. The OH groups can be attached to the aryl group at any allowable position. For example, in the case where Ar is a phenylene group the OH groups can be ortho, meta or para substituted on the phenyl ring with respect to each other. Optionally, the diphenolic monomers are selected from the group consisting of hydroquinone (1,4-benzenediol), resorcinol (1,3-benzenediol), pyrocatechol (1,2-benzenediol) or bisphenol-A. Most preferably, the diphenolic monomer is hydroquinone.

Another embodiment of the method of the invention comprises: providing a first component (such as a monohalide-monophenolic monomer) to a portion of an ionic liquid and forming a pre-reaction mixture; providing heat and agitation to the pre-reaction mixture for a period of time sufficient to allow substantial reaction of the first component and isolating the polymeric material.

The monohalide-monophenolic monomers used in the invention typically have the formula X-R¹-[C(O-R²]ₙ-OH or X-R¹-S(O)₂-R²-OH wherein
X is selected from the group consisting of F, Cl, Br and I. Preferably X is Cl or F. Most preferably, X is F.
R¹ and R² are aryl groups. Optionally, the aryl groups are phenylene groups optionally further substituted with one or more groups selected from alkyl or halogen.
n is 1 or 2. Preferably, n is 1.
X and OH are attached to groups R¹ and R² respectively at any allowable position. In the case where R¹ and R² are phenylene groups, X and OH can each independently be attached at the ortho, meta, or para positions on the phenyl ring. Preferably, X and OH are each attached at the para position of the phenyl ring.

In a preferred embodiment R¹ and R² are unsubstituted phenylene groups and X is F. More preferably the monohalide-monophenolic monomer used in the invention is 4-fluoro-4'-hydroxybenzophenone.

In one embodiment a base is provided to the ionic liquid. For example, the base is provided with the monomers to the ionic liquid to form the pre-reaction mixture. Typical bases used in the method of the invention are metal carbonates, bicarbonates or hydroxides. The metal cation of the metal carbonate may be selected from rubidium, caesium, lithium, sodium or potassium. Preferred bases used in the invention are potassium carbonate and sodium carbonate.

The metal carbonate base used in the reaction and the by-product metal salts that are produced in the reaction have improved solubility in the ionic liquid solvents used in the invention. Thus, the use of an ionic liquid enables the cheaper base sodium carbonate to be used, rather than the more expensive potassium carbonate. Additionally, the purity of the end product polymer is improved because the by-product metal salts produced, for example, potassium or sodium fluoride, are soluble in the ionic liquid, and so do not contaminate the polymer product.

In some embodiments, the disclosures herein provide a method for conducting a nucleophilic aromatic substitution reaction in an ionic liquid and forming a polymeric material selected from among polyetherketone and polyethersulphone polymers.

Polyetherketone polymers are a group of polymers whose repeating units each contain at least one ether and at least one ketone functional group. In one embodiment, the polymer repeating unit contains one ether and one ketone functional group. An example of such a polymer is PEK, having the structure shown below:

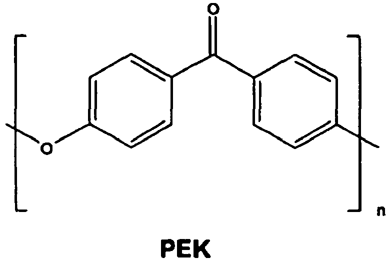

Optionally, the polymer repeating unit contains one ether and two ketone functional groups. An example of such a polymer is PEKK, having the structure shown below:

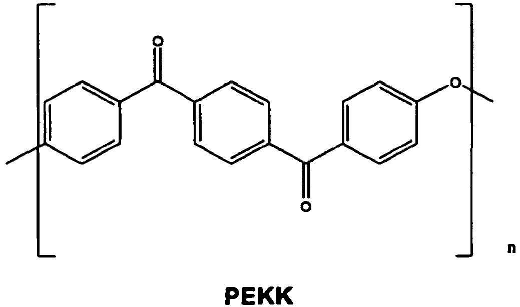

Preferably, the polyetherketone polymer repeating unit contains two ether and one ketone functional group. An example of such a polymer is PEEK, whose structure is shown below.

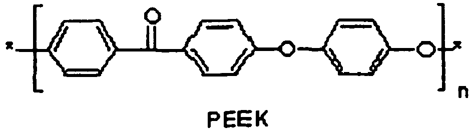

Polyethersulphone polymers are a group of polymers whose repeating units each contain at least one ether and at least one sulphonyl functional group. In one embodiment, the repeating unit contains one ether and one sulphonyl functional group. An example of such a polymer is PES, whose structure is shown below:

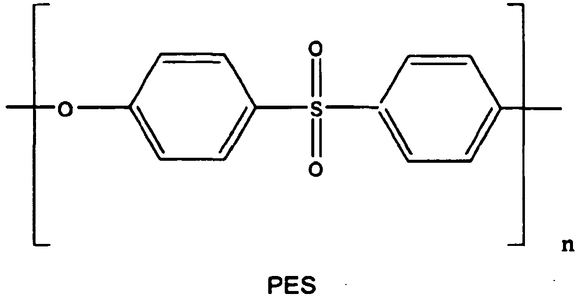

In another embodiment, the repeating unit contains two ether and one sulphonyl functional group. An example of such a polymer is PS, whose structure is shown below;

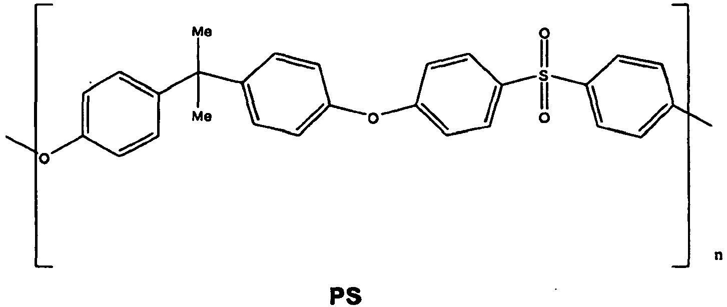

Details of the preparation and use of PS are given in J.E. Harris, Engineering Thermoplastics, Marcel Dekker 1985 J. M. Margolis ed. P 177ff*.*

In some embodiments, the disclosures herein provide a method for conducting a nucleophilic aromatic substitution reaction in an ionic liquid and forming the polymeric material PEEK.

In some embodiments, the disclosures herein relate to the use of ionic liquids as solvents for the synthesis of PEEK by either of solution or suspension polymerization.

In some embodiments, the disclosures herein relate to a polymer which is substantially identical in characteristics (based upon spectroscopic methods, e.g. NMR, IR, DSC) prepared in diphenylsulphone and an ionic liquid and starting with hydroquinone and 4,4'-difluorobenzophenone.

Ionic liquids or low temperature molten salts are known in the art as very low volatility solvents suitable for carrying out a range of chemical processes. However it has not previously been disclosed that ionic liquids can be employed as solvents for conducting polymeric nucleophilic aromatic substitution reactions, particularly in the synthesis of PEEK. Ionic liquids particularly useful in the present invention are those comprising a nitrogen containing heterocyclic cation. For example, possible ionic liquids are 1-butyl-1-methyl-azepanium bis(trifluoromethylsulfonyl)imide; 1-butyl-1-methyl-azepanium dicyanamide; 6-azonia-spiro[5,6]dodecane bis(trifluoromethylsulfonyl)imide; 6-azoniaspiro[5,6]dodecane dicyanamide; 1-benzyl-3-methylimidazolium chloride 1-butyl-1,3-dimethylpiperidinium bis(trifluoromethylsulfonyl)imide; 1-butyl-1,3-dimethylpiperidinium dicyanamide; 1-butyl-3-methylimidazolium bis(trifluoromethylsulfonyl)imide; 1-hexyl-3-methylimidazolium chloride, 1-ethyl-3-methylimidazolium bis(trifluoromethylsulfonyl)imide; 1-butyl-3-methylimidazolium tetrafluoroborate; 1-ethyl-3-methylimidazolium acetate; 1-ethyl-3-methylimidazolium thiocyanate; 1-ethyl-3-methylimidazolium ethylsulfate and N,N-dimethylethanolamine acetate. Preferably, the ionic liquid is 1-butyl-3-methylimidazolium bis(trifluoromethylsulfonyl)imide.

In some embodiments, the disclosures herein relate to the use of ionic liquids as solvents for the synthesis of PEEK by either of solution or suspension polymerization and the ionic liquids employed are those disclosed in and known from the U.S. Published Patent Application 2008/0296531A1 to Whiston et al. (published December 04, 2008); the disclosures of which are hereby incorporated by reference in their entirety, for example, 1-butyl-1-methyl-azepanium bis(trifluoromethylsulfonyl)imide; 1-butyl-1-methyl-azepanium dicyanamide; 6-azonia-spiro[5,6]dodecane bis(trifluoromethylsulfonyl)imide; 6-azonia-spiro[5,6]dodecane dicyanamide; 1-butyl-1,3-dimethylpiperidinium bis(trifluoromethylsulfonyl)imide and 1-butyl-1,3-dimethylpiperidinium dicyanamide.

In some embodiments, the disclosures herein relate to polyethersulphone synthesis and the use of ionic liquids.

In one embodiment, monofunctional monomers are provided to the ionic liquid along with the other reactants to form the pre-reaction mixture. In contrast to the dihalide, diphenolic and monohalide-monophenolic monomers, the monofunctional monomers have only one reactive group and as such are chain limiting additives that serve to induce chain termination in the polymer synthesis. Thus suitable monofunctional monomers are phenol and arylmonohalides such as 4-fluorobenzophenone or 4-chlorobenzophenone.

In another embodiment, multifunctional monomers are provided to the ionic liquid along with the other reactants to form the pre-reaction mixture. In contrast to the dihalide, diphenolic and monohalide-monophenolic monomers, the multifunctional monomers have more than two reactive groups and as such are chain branching agents that serve to induce chain branching in the polymer synthesis. Thus suitable multifunctional monomers are trihydroxybenzenes and trihalobenzene species.

### BRIEF DESCRIPTION OF DRAWINGS

Figure 1 shows NMR spectra for PEEK samples prepared in accordance with the methods of Comparative Example 1 and Example 1.
Figure 2 shows diffuse reflectance FT IR spectra for PEEK samples prepared in accordance with the methods of Comparative Example 1 and Example 1.
Figure 3 graphically illustrates the results of Differential Scanning Calorimetry (DSC) testing of the PEEK material in comparative example 1.
Figure 4 graphically illustrates DSC results of the PEEK material of Example 1.
Figure 5 shows the results of thermogravimetric analysis (TGA) at a heating rate of 5°C per minute under N₂ flow. Temperature in degrees Centigrade appears on the x-axis and percentage of original weight appears on the y-axis. The solid line curve shows the results for PEEK prepared by the method of Example 1. The dashed line curve shows the results of PEEK prepared by the method of Comparative Example 1 using diphenylsulfone.

### DETAILED DESCRIPTION

Although the following detailed description contains many specifics for the purpose of illustration, a person of ordinary skill in the art will appreciate that many variations and alterations to the following details are within the scope of the invention.

Accordingly, the following embodiments of the invention are set forth without any loss of generality to, and without imposing limitations upon the claimed invention. Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, the preferred methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

As will be apparent to those of skill in the art upon reading this disclosure, each of the individual embodiments described and illustrated herein has discrete components and features that may be readily separated from or combined with the features of any of the other several embodiments without departing from the scope or spirit of the present disclosure. Any recited method can be carried out in the order of events recited or in any other order that is logically possible.

Embodiments of the present disclosure will employ, unless otherwise indicated, techniques of chemistry, polymer chemistry, and the like, which are within the skill of the art. Such techniques are explained fully in the literature.

The following examples are put forth so as to provide those of ordinary skill in the art with a complete disclosure and description of how to perform the methods and use the compositions and compounds disclosed and claimed herein. Efforts have been made to ensure accuracy with respect to numbers (e.g., amounts, temperature, etc.), but some errors and deviations should be accounted for. Unless indicated otherwise:
parts are parts by weight,
temperature is in °C, and
pressure is in atmospheres.

Standard temperature and pressure are defined as 25°C and 1 atmosphere.

Before the embodiments of the present disclosure are described in detail, it is to be understood that, unless otherwise indicated, the present disclosure is not limited to particular materials, reagents, reaction materials, manufacturing processes, or the like, as such can vary. It is also to be understood that the terminology used herein is for purposes of describing particular embodiments only, and is not intended to be limiting. It is also possible in the present disclosure that steps can be executed in different sequence where this is logically possible.

As used herein, for both the specification and the appended claims, the singular forms "a," "an," and "the" include plural referents unless the context clearly dictates otherwise. Thus, for example, reference to "a support" includes a plurality of supports. In this specification and in the claims that follow, reference will be made to a number of terms that shall be defined to have the following meanings unless a contrary intention is apparent.

### Definitions and Test Methods

An ionic liquid is a liquid that contains essentially only ions, i.e. molten salts, although some ionic liquids are in a dynamic equilibrium wherein the majority of the liquid is made up of ionic rather than molecular species. In the art, the term "ionic liquid" is used to refer to such salts whose melting point is below 100°C. Such ionic liquids are sometimes also referred to as room temperature ionic liquids (RTIL). Ionic liquids are typically salts of bulky and asymmetric organic cations. For instance, US 7,157,588 teaches compositions based on N-substituted pyrrolidinones having a pendant ammonium cation separated from the pyrrolidone ring by a variable length alkyl spacer. WO 2006/136529 teaches pyrazolium alkylsulfates and a method for their production. WO 2008/150842 describes a broad class of ionic liquids comprising heterocyclic nitrogen containing cations.

The term "ionic liquid" as used in the context of the invention refers to a salt whose melting point is below about 100°C. Optionally, the ionic liquids used in the invention comprise an organic cation. Organic cations are cations containing at least one carbon atom. Typically, the organic cation contains at least one alkyl group. Conveniently, the ionic liquid comprises an asymmetric organic nitrogen containing cation. In one aspect, the ionic liquids used in the invention comprise an organic anion. Organic anions are anions containing at least one carbon atom. Typically, organic anions are anions containing at least one carbon atom but excluding carbonate anions or bicarbonate anions. In another aspect, the ionic liquids used in the invention comprise an organic cation and an organic anion, wherein the organic cation and anion are as defined above.

The process of the present invention may utilise a single ionic liquid or a mixture of two or more ionic liquids. Typically, one or two, and typically only one ionic liquid is used. Thus in one embodiment the ionic liquid comprises a cation selected from one or more of 1-alkylpyridinium (N-alkylpyridinium); alkyl- or polyalkyl-pyridinium; alkyl- or polyalkylguanidinium (particularly tetraalkylguanidinium); imidazolium, alkyl- or polyalkylimidazolium (particularly 1,3-dialkylimidazolium); ammonium (NR₄⁺), alkyl- or polyalkylammonium (particularly tetraalkylammonium); alkyl- or polyalkyl-pyrazoliuml; alkyl- or polyalkyl-pyrrolidinium (particularly dialkylpyrrolidinium); alkyl- or polyalkyl-piperidinium (particularly 3-methylpiperidinium); alkyl- or polyalkyl-azepanium; alkyl or polyalkylazepinium, alkyloxonium, and alkysulfonium. Each R group of the ammonium cations may be independently selected from hydrogen, hydroxyl, alkyl, alkyl ethers, alkyl esters, alkyl amides, alkyl carboxylic acids, aryl or sulfonate. Examples include N-ethylpyridinium; N-methyl-N-alkylpyrrolidinium such as N-butyl-N-methylpyrrolidinium; N-methyl-N-(butyl-4-sulfonic acid)pyrrolidinium; 1-alkyl-3-alkylimidazolium such as 1-butyl-3-methylimidazolium (BMIM; also referred to as N-Methyl-N'-butylimidazolium); 1-alkyl-3-arylimidazolium such as 1-methyl-3benzylimidazolium, 1-methyl-3-ethylimidazolium and trimethyl-(2-hydroxyethyl)ammonium.

A number of different anions may be employed, including inorganic anions and large organic anions. In one embodiment, the anion of the ionic liquid(s) is selected from one or more of a halide (conveniently chloride, bromide or iodide), nitrate, an alkylsulfonate or alkyl polyalkoxysulfonate, hydrogensulfonate, hexafluorophosphate and tetrafluoroborate, and other anions based on nitrogen, phosphorous, sulphur, boron, silicon, selenium, tellurium, halogens, and oxoanions of metals. Suitable anions include, but are not limited to tetrafluoroborate (BF₄⁻), bis(trifluoromethylsulfonyl)imide (NTf₂⁻), hydrogensulfate (HSO₄⁻), methylsulfonate, trifluoromethylsulfonate, methoxyethylsulfonate, 2-methoxyethylsulfonate, ethoxyethylsulfonate, 2-ethoxyethylsulfonate, (methoxypropoxy)propylsulfonate, 1-(1-methoxypropoxy)-propylsulfonate, (methoxyethoxy)-ethylsulfonate, 1-(1-methoxyethoxy)-ethylsulfonate, methyl(diethoxy)ethylsulfonate, 1-methyl(diethoxy)ethylsulfonate, toluene-4-sulfonate, trifluoromethylsulfonyl, carboxylate, formate, acetate, carbonate, bicarbonate, dicyanimide, trifluoroacetate, and bis(trifluoromethanesulfonyl)imide.

The method of the invention comprises providing heat to the pre-reaction mixture for a period of time sufficient to allow substantial reaction of the monomer components. The skilled practitioner in the field of polymer chemistry would readily understand the required temperatures and times for substantial reaction of the monomer components.

Typical temperatures for the reaction are in the range 150°C and 400°C. Optionally the reaction is carried out at a temperature in the range 200°C and 400°C. Conveniently, a temperature in the range 250°C and 350°C is used. In one embodiment the temperature is raised in stages, or continuously, throughout the reaction process, to a level such that the final polymer is in solution at any intermediate stage. Optionally the reaction temperature can start at 200°C and subsequently be increased to 250°C, optionally being further increased to 320°C after set periods of time, or as required by the solubility of the polymer being formed at those temperatures.

Typically the time sufficient to allow substantial reaction of the monomers is at least 1 hour, optionally at least 2 hours, optionally at least 3 hours, optionally at least 4 hours.

As mentioned above, the reaction may be carried out at different temperatures for different periods of time. In one embodiment, the reaction can be carried out at 200°C for 2 hours and then the temperature is increased to 250°C for a further 2 hours. Optionally, the reactions is carried out at 200°C for 1 hour, 250°C for a further 1 hour and then 320°C for a further 1 hour.

Substantial reaction of the monomer components is evident when a product Relative Viscosity (RV) of at least 1.05 is achieved. In one embodiment substantial reaction of the monomer components is evident when the RV of the product is at least 1.1, 1.2, 1.3, 1.4 or 1.5.

As used herein, the term aryl means a carbocyclic aromatic group, such as phenyl or naphthyl (optionally phenyl).

The aryl group may be substituted with one or more substituents wherein possible substituents include alkyl; aryl; arylalkyl (e.g. substituted and unsubstituted benzyl, including alkylbenzyl); halogen atoms and halogen-containing groups such as haloalkyl (e.g. trifluoromethyl) or haloaryl (e.g. chlorophenyl); hydroxyl; carboxyl (e.g. carboxaldehyde, alkyl- or aryl-carbonyl, carboxy, carboxyalkyl or carboxyaryl), amide and nitrile. Optionally the aryl group is unsubstituted.

Relative Viscosity (RV) is measured as follows: 1 gram of polymer is dissolved in 100 cm³ of 96-98% sulphuric acid (density of 1.84 g/cm³). The flow time, tₛ, of this freshly made solution through a U-tube viscometer is determined at 25°C. Similarly the flow time, to, of the sulphuric acid solvent is also determined (ideally a flow time of about 120 seconds). RV is calculated from RV=tₛ/tₒ.

The characterization of the polymer solutions and dispersions of particles is well-known to the skilled person. As used herein, Diffuse Reflectance Infrared Fourier Transform Spectroscopy (DRIFTS) is a technique that collects and analyzes scattered IR energy. DRIFTS is used for measurement of fine particles and powders, and sampling is not difficult since no sample preparation is required. As the skilled practitioner knows, the IR beam enters the sample and is either reflected off the surface of a particle or transmitted through a particle. The IR energy reflecting off the surface is typically lost. The IR beam that passes through a particle can either reflect off the next particle or be transmitted through the next particle. This transmission-reflectance event can occur many times in the sample, increasing the path length. Ultimately the scattered IR energy is collected by a spherical mirror focused onto the detector. The detected IR light partially absorbed by particles of the sample contain the sample information as a result.

Differential scanning calorimetry (DSC) is a thermoanalytical technique used herein to quantify the difference in the amount of heat required to increase the temperature of a sample and a reference as a function of temperature. As is known to the skilled person, both the sample and reference are maintained at nearly the same temperature throughout the experiment. A temperature program for a DSC analysis is such that the sample holder temperature increases linearly as a function of time. The reference sample should have a well-defined heat capacity over the range of temperatures to be scanned. Herein, and known to the skilled person, DSC is applied to polymer phase transitions, such as melting, glass transitions, or exothermic decompositions involving energy changes or heat capacity changes.

Nuclear magnetic resonance spectroscopy (NMR) is spectroscopic technique well-known to the skilled person and used herein to characterize the polymers prepared herein. Both the FT-NMR and the traditional technique may be employed in the teachings of this disclosure.

Thermogravimetric Analysis or TGA is a thermoanalytical technique used herein to quantify the changes in weight of a polymer in relation to a change in temperature. As known to the skilled practitioner, these analyses rely upon a high degree of precision in three measurements: weight, temperature, and temperature change. TGA as used herein is commonly employed in research and testing to determine certain characteristics of polymers, e.g. their degradation temperatures, absorbed moisture content, the level of inorganic and organic components in materials, and solvent residues.

### EXAMPLES

The following examples are provided to illustrate the present invention. The examples are not intended to limit the scope of the present invention and should not be so interpreted.

It should be noted that ratios, concentrations, amounts, and other numerical data may be expressed herein in a range format. It is to be understood that such a range format is used for convenience and brevity, and thus, should be interpreted in, a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1% to about 5%" should be interpreted to include not only the explicitly recited concentration of about 0.1 wt% to about 5 wt%, but also the individual concentrations (e.g., 1%, 2%, 3%, and 4%) and the sub-ranges (e.g., 0.5%, 1.1%, 2.2%, 3.3%, and 4.4%) within the indicated range. The term "about" can include ±1%. ±2%, ±3%, ±4%, ±5%, ±8%, or ±10%, of the numerical value(s) being modified. In addition, the phrase "about 'x' to 'y'" includes "about 'x' to about 'y'".

### Example 1

A mixture of hydroquinone (1.691 g, 15.36 mmol), 4,4-difluorobenzophenone (3.347 g, 15.34 mmol), ground potassium carbonate (2.144 g, 15.51 mmol) and the ionic liquid, 1-butyl-3-methylimidazolium bis{(trifluoromethyl)sulfonyl}amide (15 mL) was purged by vacuum/nitrogen cycles using a Schlenk line. This mixture was stirred under a nitrogen atmosphere and heated at 200°C for 1 hour, and then at 250 °C for further 1 hour and finally at 320°C for a further 1 hour. A brown slurry was obtained which was cooled to room temperature, and mixed with propanone (40 mL). The resulting suspension was stirred vigorously. The resulting product powder was collected by filtration, washed with water (3 × 20 mL), and then with a propanone/methanol mixture (1:1 by weight, 3 × 20 mL). The product was then dried under an air stream and then under high vacuum at 140°C for 12 h to give a brown solid (3.684 g, 83%). The product was characterized by differential scanning calorimetry (DSC) under a nitrogen atmosphere at a 10°C/min heating/cooling rates, and the melting point (m. p. = 326°C) was obtained as the exothermic peak in the second heating cycle. The relative viscosity (RV = 1.44) was measured as a solution in sulfuric acid (1% by weight) in a D' type viscometer. The product was also analysed by ¹H n.m.r. in D₂SO₄ as solvent and using Diffuse Reflectance FT-IR.

### Example 2

As in Example 1, a mixture of hydroquinone (1.652 g, 15.00 mmol), 4,4-difluorobenzophenone (3.273 g, 15.00 mmol), and ground potassium carbonate (2.103 g, 15.22 mmol) were reacted in the ionic liquid 1-butyl-3-methylimidazolium bis{(trifluoromethyl)sulfonyl}amide (15 mL) as solvent. The reaction was carried out at a temperature of 200°C for 2 hours, and then at 250°C for further 2 hours. The white reaction product slurry which resulted was then treated as in Example 1 to give a white solid (4.090 g, 95% yield). The product was characterized as in Example 1 (m. p. = 329°C, RV = 1.32).

### Example 3

As in Example 1, a mixture of hydroquinone (1.003 g, 10.02 mmol), 4,4-dichlorobenzophenone (2.517 g, 10.02 mmol), and ground potassium carbonate (1.399 g, 10.12 mmol) were reacted in the ionic liquid 1-butyl-3-methylimidazolium bis((trifluoromethyl)sulfonyl)amide (10 mL) as solvent. The resulting brown product slurry was then treated as in Example 1 to give a white solid (2.150 g, 74% yield). The product was characterized as in Example 1 (RV = 1.23).

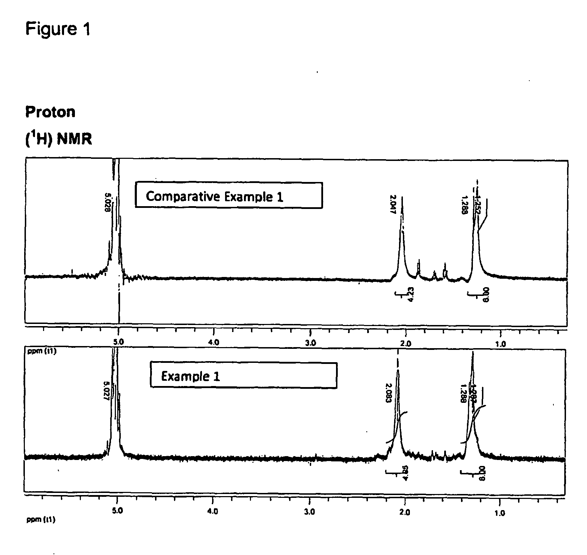

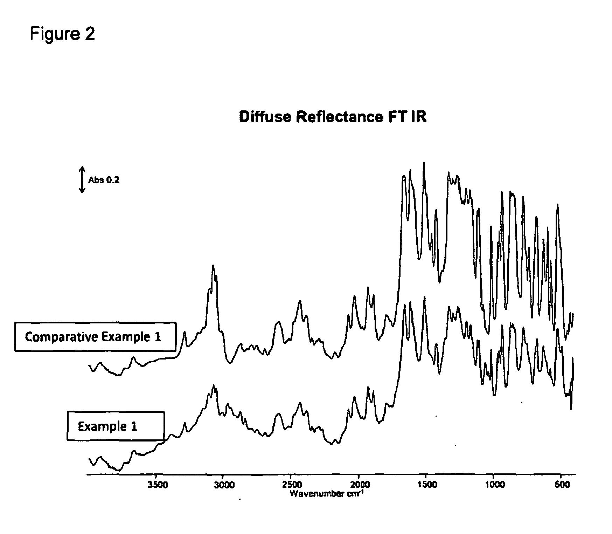

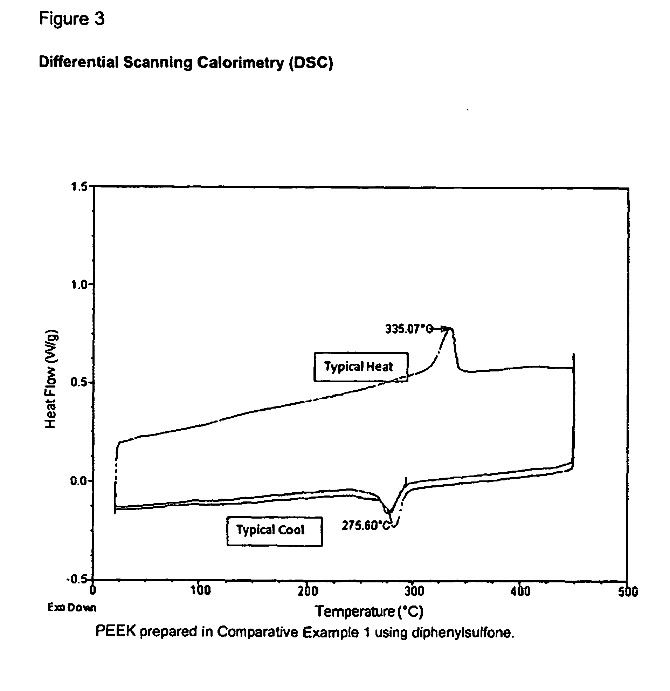

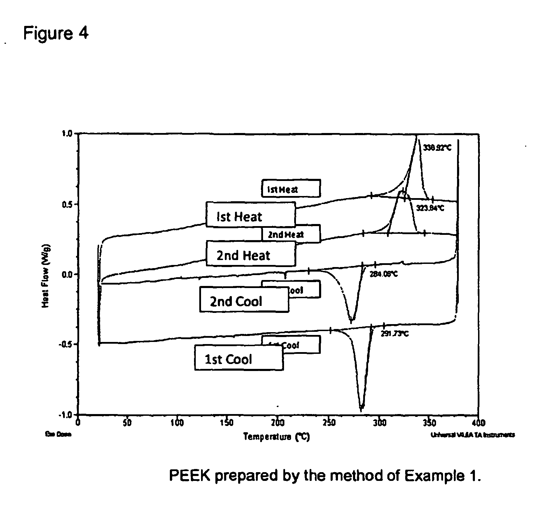

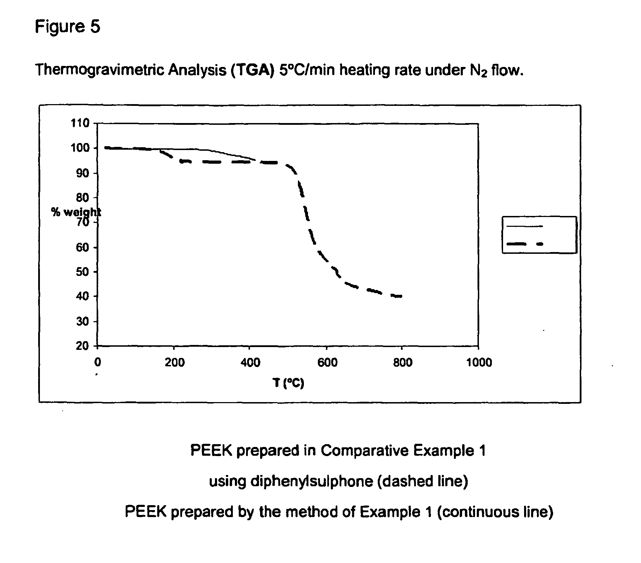

Figures 1, 2 , 3, 4 and 5 compare the 1H NMR, FTIR (DRIFT), DSC and TGA data for example 1 and comparative example 1. They demonstrate the similar nature of the product formed using either method.

### Comparative Example 1

A mixture of hydroquinone (1.106 g, 10.04 mmol), 4,4-difluorobenzophenone (2.192 g, 10.05 mmol), and ground potassium carbonate (1.400 g, 10.13 mmol) were reacted as in Example 1 but with diphenylsulfone (6.09 g) as solvent. The grey solid mixture thus obtained is crushed at 100-120°C, then cooled down with liquid nitrogen and ground to a fine powder, which is then treated as in the work-up in Example 1 to give a grey solid (2.775 g, 96%). The product was characterized as in Example 1 (m. p. = 335°C, RV = 2.48).

### Comparative Example 2

A mixture of hydroquinone (1.100 g, 9.990 mmol), 4,4-dichloro-benzophenone (2.510 g, 10.00 mmol), and ground potassium carbonate (1.490 g, 10.78 mmol) were reacted as in Example 1 but with diphenylsulfone (7.02 g) as solvent. The grey solid mixture was then treated as in the work-up in Example 4 to give a grey solid (2.785 g, 97%). The product was characterized as in Example 1 (m. p. = 328°C, RV = 2.00).

Comparative examples 1 and 2 are conducted along the lines of the disclosures of European Patent document EP 0001879 B2 (in the name of ICI Ltd., published 1989-11-23).

**Table 1**

| Results of Examples of the Invention and Comparative Examples | | | | | | | |
|---|---|---|---|---|---|---|---|
| | | | | | | | |

| Example # | Solvent | Starting dihalide | T(°C) | t(h) | Yield (%) | m. p. (°C) DSC | RV |
|---|---|---|---|---|---|---|---|
| 1 | [C₄mim][NTf₂] | difluoride | 200, 250, 320 | 1, 1, 1 | 83 | 336 | **1.49** |
| 2 | [C₄mim][NTf₂] | difluoride | 200, 250 | 2, 2 | 95 | 332 | **1.32** |
| 3 | [C₄mim][NTf₂] | dichloride | 200, 250, 320 | 1, 1, 1 | 74 | | **1.23** |
| | | | | | | | |
| Comparative Example # | | | | | | | |
| 1 | Ph₂SO₂ | difluoride | 200, 250, 320 | 1, 1, 1 | 96 | 335 | **2.48** |
| 2 | Ph₂S0₂ | dichloride | 200, 250, 320 | 1, 1, 1 1 | 97 | 328 | **2.00** |

Many variations and modifications may be made to the above-described embodiments. All such modifications and variations are intended to be included herein within the scope of this disclosure and protected by the following claims.

## Claims

1. Use of an ionic liquid as a solvent in a nucleophilic aromatic substitution reaction to form a polymeric material.

2. Use according to claim 1, wherein the nucleophilic aromatic substitution reaction comprises the steps of:
providing at least a portion of a first component and a portion of a second component to a portion of an ionic liquid to form a pre-reaction mixture;
providing heat and agitation to the pre-reaction mixture for a period of time sufficient to allow substantial reaction of the monomer components; and isolating the polymeric material.

3. Use according to claim 1, wherein the nucleophilic aromatic substitution reaction comprises the steps of:
providing at least a portion of a component comprising a monohalide-monophenolic monomer to a portion of an ionic liquid and forming a pre-reaction mixture;
providing heat and agitation to the pre-reaction mixture for a period of time sufficient to allow substantial reaction of the monomer components; and isolating the polymeric material.

4. Use according to any one of claims 2 or 3 wherein monofunctional monomers are provided to the ionic liquid to form the pre-reaction mixture.

5. Use according to any one of claims 2 to 4 wherein multifunctional monomers are provided to the ionic liquid to form the pre-reaction mixture.

6. A method of conducting a nucleophilic aromatic substitution reaction in an ionic liquid and forming a polymeric material, the method comprising contacting reactants in an ionic liquid.

7. The method of claim 6 wherein the reactants comprise a portion of first component and a portion of a second component, and the components are provided to a portion of an ionic liquid to form a pre-reaction mixture.

8. The use of claim 2 or the method of claim 7 wherein the first component comprises a dihalide monomer and the second component comprises a diphenolic monomer.

9. The method of claim 11 wherein the reactants comprise a portion of a monohalide-monophenolic monomer which is provided to a portion of an ionic liquid to form a pre-reaction mixture

10. The method of any one of claims 12 to 14 wherein conducting the nucleophilic aromatic substitution reaction comprises:
providing heat and agitation to the pre-reaction mixture for a period of time sufficient to allow substantial reaction of the monomer components; and isolating the polymeric material.

11. The use of anyone of claims 1 to 3 or the method of any one of claims 6 to 10 wherein a base is provided to the ionic liquid along with the monomer components.

12. The use of anyone of claims 1 to 3 or the method of any one of claims 6 to 11 wherein the polymeric material is selected from among polyetherketone and polyethersulphone polymers.

13. The use of any one claims 1 to 3 or the method of claim 12 wherein the polymeric material is selected from PEEK, PEK, PEKK, PES or PS, preferably PEEK.

14. The method of any one of claims 7 to 13 wherein monofunctional monomers are 14. The method of any one of claims 7 to 13 wherein monofunctional monomers are provided to the ionic liquid along with the other reactants to form the pre-reaction mixture.

15. The method of any one of claims 7 to 14 wherein multifunctional monomers are provided to the ionic liquid along with the other reactants to form the pre-reaction mixture.

## Patentansprüche

1. Verwendung einer ionischen Flüssigkeit als ein Lösungsmittel bei einer nukleophilen aromatischen Substitutionsreaktion zur Bildung eines Polymermaterials.

2. Verwendung nach Anspruch 1, wobei die nukleophile aromatische Substitutionsreaktion die folgenden Schritte umfasst:
Bereitstellen mindestens eines Teils einer ersten Komponente und eines Teils einer zweiten Komponente an einen Teil einer ionischen Flüssigkeit zur Bildung einer Vorreaktionsmischung;
Bereitstellen von Wärme und Rühren an die Vorreaktionsmischung für eine Zeitdauer, die für eine bedeutende Umsetzung der Monomerkomponenten ausreicht; und Gewinnen des Polymermaterials.

3. Verwendung nach Anspruch 1, wobei die nukleophile aromatische Substitutionsreaktion die folgenden Schritte umfasst:
Bereitstellen mindestens eines Teils einer Komponente, die ein Monohalogen-Monophenol-Monomer umfasst an einen Teil einer ionischen Flüssigkeit zur Bildung einer Vorreaktionsmischung;
Bereitstellen von Wärme und Rühren an die Vorreaktionsmischung für eine Zeitdauer, die für eine bedeutende Umsetzung der Monomerkomponenten ausreicht; und Gewinnen des Polymermaterials.

4. Verwendung nach einem der Ansprüche 2 oder 3, wobei monofunktionelle Monomere an die ionische Flüssigkeit zur Bildung der Vorreaktionsmischung bereitgestellt werden.

5. Verwendung nach einem der Ansprüche 2 bis 4, wobei multifunktionelle Monomere an die ionische Flüssigkeit zur Bildung der Vorreaktionsmischung bereitgestellt werden.

6. Verfahren einer Durchführung einer nukleophilen aromatischen Substitutionsreaktion in einer ionischen Flüssigkeit und Bilden eines Polymermaterials, wobei das Verfahren Inkontaktbringen von Reaktanten in einer ionischen Flüssigkeit umfasst.

7. Verfahren nach Anspruch 6, wobei die Reaktanten einen Teil einer ersten Komponente und einen Teil einer zweiten Komponente umfassen, und die Komponenten an einen Teil einer ionischen Flüssigkeit zur Bildung einer Vorreaktionsmischung bereitgestellt werden.

8. Verwendung nach Anspruch 2 oder Verfahren nach Anspruch 7, wobei die erste Komponente ein Dihalogen-Monomer und die zweite Komponente ein Diphenol-Monomer umfasst.

9. Verfahren nach Anspruch 11, wobei die Reaktanten einen Teil eines Monohalogen-Monophenol-Monomers umfassen, das an einen Teil einer ionischen Flüssigkeit zur Bildung einer Vorreaktionsmischung bereitgestellt wird.

10. Verfahren nach einem der Ansprüche 12 bis 14, wobei Durchführen der nukleophilen aromatischen Substitutionsreaktion Folgendes umfasst:
Bereitstellen von Wärme und Rühren an die Vorreaktionsmischung für eine Zeitdauer, die für eine bedeutende Umsetzung der Monomerkomponenten ausreicht; und Gewinnen des Polymermaterials.

11. Verwendung nach einem der Ansprüche 1 bis 3 oder Verfahren nach einem der Ansprüche 6 bis 10, wobei eine Base zusammen mit den Monomer-Komponenten an die ionische Flüssigkeit bereitgestellt wird.

12. Verwendung nach einem der Ansprüche 1 bis 3 oder Verfahren nach einem der Ansprüche 6 bis 11, wobei das Polymermaterial aus Polyetherketon- und Polyethersulfon-Polymeren ausgewählt ist.

13. Verwendung nach einem der Ansprüche 1 bis 3 oder Verfahren nach Anspruch 12, wobei das Polymermaterial aus PEEK, PEK, PEKK, PES oder PS, vorzugsweise PEEK ausgewählt ist.

14. Verfahren nach einem der Ansprüche 7 bis 13, wobei monofunktionelle Monomere zusammen mit den anderen Reaktanten an die ionische Flüssigkeit zur Bildung der Vorreaktionsmischung bereitgestellt werden.

15. Verfahren nach einem der Ansprüche 7 bis 14, wobei multifunktionelle Monomere zusammen mit den anderen Reaktanten an die ionische Flüssigkeit zur Bildung der Vorreaktionsmischung bereitgestellt werden.

## Revendications

1. Utilisation d'un liquide ionique en tant que solvant lors d'une réaction de substitution nucléophile, en vue d'obtenir une matière polymère.

2. Utilisation selon la revendication 1, dans laquelle la réaction de substitution nucléophile comprend les étapes suivantes :
mettre au moins une partie d'un premier composant et une partie d'un deuxième composant dans une partie d'un liquide ionique pour obtenir un mélange préréactionnel ;
apporter chaleur et agitation au mélange préréactionnel pendant une durée suffisante pour permettre une réaction importante des composants monomères ; et isoler la matière polymère.

3. Utilisation selon la revendication 1, dans laquelle la réaction de substitution nucléophile comprend les étapes suivantes :
adjoindre au moins une partie d'un composant comprenant un monomère monohalogénure-monophénolique à une partie de liquide ionique en formant un mélange préréactionnel ;
apporter chaleur et agitation au mélange préréactionnel pendant une durée suffisante pour permettre une réaction importante des composants monomères ; et isoler la matière polymère.

4. Utilisation selon l'une quelconque des revendications 2 ou 3, dans laquelle des monomères monofonctionnels sont adjoints au liquide ionique pour former le mélange préréactionnel.

5. Utilisation selon l'une quelconque des revendications 2 à 4, dans laquelle des monomères multifonctionnels sont adjoints au liquide ionique pour former le mélange préréactionnel.

6. Procédé de mise en oeuvre d'une réaction de substitution nucléophile dans un liquide ionique et d'obtention d'une matière polymère, ce procédé comprenant la mise en contact de réactifs dans un liquide ionique.

7. Procédé selon la revendication 6, dans lequel les réactifs comprennent une partie d'un premier composant et une partie d'un deuxième composant, et où les composants sont adjoints à une partie d'un liquide ionique pour donner un mélange préréactionnel.

8. Utilisation selon la revendication 2 ou procédé selon la revendication 7, dans lequel le premier composant contient un monomère dihalogénure et où le deuxième composant contient un monomère diphénolique.

9. Procédé selon la revendication 11, dans lequel les réactifs comprennent une partie d'un monomère monohalogénure-monophénolique, qui est adjoint à une partie d'un liquide ionique pour donner un mélange préréactionnel.

10. Procédé selon l'une quelconque des revendications 12 à 14, dans lequel la mise en oeuvre de la réaction de substitution nucléophile comprend les étapes suivantes :
apporter chaleur et agitation au mélange préréactionnel pendant une durée suffisante pour permettre une réaction importante des composants monomères; et isolation de la matière polymère.

11. Utilisation selon l'une quelconque des revendications 1 à 3 ou procédé selon l'une quelconque des revendications 6 à 10, dans lequel une base est adjointe au liquide ionique conjointement avec les composants monomères.

12. Utilisation selon l'une quelconque des revendications 1 à 3 ou procédé selon l'une quelconque des revendications 6 à 11, dans lequel la matière polymère est choisie parmi les polymères de type polyéthercétone et polyéthersulfone.

13. Utilisation selon l'une quelconque des revendications 1 à 3 ou procédé selon la revendication 12, dans lequel la matière polymère est choisie parmi le PEEK, le PEK, le PEKK, le PES ou le PS, avec une préférence pour le PEEK.

14. Procédé selon l'une quelconque des revendications 7 à 13, dans lequel les monomères monofonctionnels sont adjoints au liquide ionique conjointement avec les autres réactifs, afin d'obtenir le mélange préréactionnel.

15. Procédé selon l'une quelconque des revendications 7 à 14, dans lequel les monomères multifonctionnels sont adjoints au liquide ionique conjointement avec les autres réactifs, afin d'obtenir le mélange préréactionnel.
